# EUROPEAN PATENT APPLICATION

(11) **EP 3 032 384 A1**
(43) Date of publication of application: **15.06.2016**
(21) Application number: 14835041.6
(22) Date of filing: 25.07.2014
(51) Int. Cl.: G06F 3/041

(54) **TOUCH SENSING ELECTRODE AND TOUCH SCREEN PANEL COMPRISING SAME**

(30) Priority: 09.08.2013 KR 20130094939
(71) Applicant: Dongwoo Fine-Chem Co., Ltd., Iksan-si, Jeollabuk-do 570-977 (KR)
(72) Inventor: YANG, Min Soo, Anyang-si Gyeonggi-do 431-793 (KR); PARK, Dong Pil, Incheon 406-840 (KR); SONG, Byung Hoon, Gunpo-si Gyeonggi-do 435-765 (KR); HA, Kyoung Su, Anyang-si Gyeonggi-do 431-706 (KR)
(74) Representative: Laufhütte, Dieter
(86) International application number: PCT/KR2014/006779
(87) International publication number: WO 2015/020336

(57) **Abstract**

The present invention relates to a touch-sensing electrode, and more specifically, to a retarder-integrated touch-sensing electrode including at least one sensing pattern disposed on at least one surface of a retarder. Accordingly, the retarder-integrated touch-sensing electrode implements a thin-film structure and has excellent visibility.

## Description

### CROSS-REFERENCE TO RELATED APPLICATION

This application claims priority to and the benefit of Korean Patent Application No. 2013-0094939, filed on AUG 09, 2013, the disclosure of which is incorporated herein by reference in its entirety.

### BACKGROUND

### 1. Field of the Invention

The present invention relates to a touch-sensing electrode and a touch screen panel including the same. More specifically, the present invention relates to a retarder-integrated touch-sensing electrode applicable to a flexible display, and a touch screen panel including the same.

### 2. Discussion of Related Art

Recently, with a rapid development of semiconductor technology, demand for display devices having small sizes, light weights, and low power consumption has been explosively increasing.

In accordance with a trend toward informatization, electronic displays for visually transferring information are appearing in various forms. In particular, the development of portable displays is strongly emerging as a requirement in the development of mobile communication.

Such display devices have changed from cathode-ray tubes (CRTs) to liquid crystal displays (LCDs), plasma display panels (PDPs), organic electro-luminescence display (OLEDs), and the like. In particular, as advantages, LCDs have lower power consumption than CRTs, are suitable to being small, light, and thin, and do not emit harmful electromagnetic waves. Thus, LCDs have attracted notice as a next-generation display, and nowadays are being installed in almost all information processing apparatuses requiring display devices.

Recently, studies on flexible displays, which are thinner and lighter than the existing panels, bendable, and fabricated using polymer films instead of glass substrates, are being actively conducted.

The flexible displays may be fabricated in forms of a plastic film LCD, an organic EL, a wearable display, an electronic book, an electronic paper, and the like, and can be applied to a very wide range of products using a display which needs to be resistant to external impact and, especially, bendable or embodied in various shapes in addition to being thin and light, such as a mobile communication terminal display or a portable information communication display.

Meanwhile, in recent years, as the use of a touch screen in which a display panel is further combined with a touch-sensing electrode has been gradually popularized, implementation of a thin film structure is becoming increasingly important.

However, even in the flexible LCD, only the substrate material is replaced from the existing glass substrate to a polymer film substrate, but other materials and components necessary for implementing a display device, such as a retarder, a polarizing plate, and a backlight, are still formed using the same method applied to the glass substrate

For example, in the existing LCD, the thickness of a polarizing plate is in a range of 200 to 400 µm, and a single thickness of a protection film used to protect a polarizer is in a range of 25 to 100 µm. Accordingly, there is a limitation to making polarizing plates and protection films light, thin, short, and small, and it is difficult to apply the existing LCD to a structure such as a thin card.

In order to solve such problems, Korean Patent Publication No. 2008-0073252 discloses a technology in which a thin structure is achieved by removing a protection film in contact with a liquid crystal cell from the polarizing plate attached to the liquid crystal cell.

### [Citation List]

### [Patent Literature]

### 1. Korean Patent Publication No. 2008-0073252

### SUMMARY OF THE INVENTION

The present invention is directed to providing a retarder-integrated touch-sensing electrode.

The present invention is also directed to providing a touch screen panel including a touch-sensing electrode having a thin film structure with superior visibility.

According to an aspect of the present invention, there is provided a retarder-integrated touch-sensing electrode including at least one sensing pattern formed on at least one surface of a retarder.

In some embodiments, the retarder may be a single layer or a laminate in which a cured liquid crystal layer is adhered to a surface of a substrate.

In other embodiments, the single-layer retarder may be a coating layer.

In still other embodiments, when the retarder is the laminate of the substrate and the cured liquid crystal layer, both a first sensing pattern and a second sensing pattern may be only formed on one surface of the substrate or the cured liquid crystal layer.

In still other embodiments, when the retarder is the laminate of the substrate and the cured liquid crystal layer, a first sensing pattern may be formed on one surface of the substrate, and a second sensing pattern may be formed on one surface of the cured liquid crystal layer.

In still other embodiments, when the retarder is a single layer, both a first sensing pattern and a second sensing pattern may be only formed on one surface of the single-layer retarder.

In still other embodiments, when the retarder is a single layer, a first sensing pattern may be formed on one surface of the single-layer retarder, and a second sensing pattern may be formed on the other surface of the single-layer retarder.

In still other embodiments, first sensing patterns and second sensing patterns may be disposed on one surface of the retarder, an insulating layer may be disposed on the first and second sensing patterns, and a bridge electrode electrically connecting the first sensing patterns spaced apart from each other may be disposed on the insulating layer.

In still other embodiments, the retarder may include a first sensing pattern disposed on one surface thereof and a second sensing pattern disposed on the other surface thereof, and the retarder electrically insulates the first sensing pattern from the second sensing pattern.

In still other embodiments, the difference in refractive index between the retarder and the sensing pattern disposed on the one surface of the retarder may be about 0.8 or less.

In still other embodiments, the refractive index of the sensing pattern may be about 1.3 to 2.5.

According to another aspect of the present invention, there is provided a touch screen panel including the above-described retarder-integrated touch-sensing electrode.

In some embodiments, the retarder-integrated touch-sensing electrode may include at least one sensing pattern disposed on an upper surface of a retarder, and an optical functional film adhered to the sensing pattern by an adhesive layer. The difference in refractive index between the adhesive layer and the sensing pattern disposed on the upper surface may be about 0.3 or less.

In other embodiments, the difference in refractive index between the adhesive layer and a sensing pattern disposed on a lower surface of the retarder may be about 0.8 or less.

In still other embodiments, the retarder-integrated touch-sensing electrode may include a first sensing pattern and a second sensing pattern on a lower surface of the retarder, and an optical functional film adhered to an upper surface of the retarder using an adhesive layer. The difference in refractive index between the adhesive layer and the sensing patterns disposed on the lower surface may be about 0.8 or less.

The touch screen panel may be adhered to a flexible display.

According to a retarder-integrated touch-sensing electrode of the exemplary embodiments of the present invention, since a touch-sensing electrode layer is directly formed on a retarder, an additional substrate for forming the touch-sensing electrode layer is not necessary. Accordingly, a thin film structure may be achieved.

In addition, since a single-layer retarder can be used as a retarder-integrated touch-sensing electrode according to the exemplary embodiments of the present invention, a thin film structure may be achieved.

In addition, according to the retarder-integrated touch-sensing electrode of the exemplary embodiments of the present invention, when a first sensing pattern and a second sensing pattern are respectively formed on different surfaces of the retarder, neither an additional insulating film nor a bridge electrode is necessary since the retarder may function as an insulating film. Accordingly, a thin film structure may be achieved and a manufacturing process may be simplified.

Further, the retarder-integrated touch-sensing electrode according to the exemplary embodiments of the present invention has excellent visibility since the difference in refractive index between a retarder and a sensing pattern is within a certain range.

Further, the retarder-integrated touch-sensing electrode according to the exemplary embodiments of the present invention can be usefully applied to a flexible display in addition to a normal display since it has a thin film structure as described above.

Further, the touch screen panel including the retarder-integrated touch-sensing electrode according to the exemplary embodiments of the present invention has excellent visibility since the difference in refractive index between an adhesive layer and a touch sensing pattern is within a certain range.

It will be apparent to those skilled in the art that various modifications can be made to the above-described exemplary embodiments of the present invention without departing from the spirit or scope of the invention. Thus, it is intended that the present invention cover all such modifications provided they come within the scope of the appended claims and their equivalents.

### BRIEF DESCRIPTION OF THE DRAWINGS

The above and other objects, features, and advantages of the present invention will become more apparent to those of ordinary skill in the art by describing in detail exemplary embodiments thereof with reference to the accompanying drawings, in which:
FIG. 1 is a plan view schematically showing a retarder-integrated touch-sensing electrode according to an exemplary embodiment of the present invention;
FIG. 2 is a cross-sectional view schematically showing a retarder-integrated touch-sensing electrode according to an exemplary embodiment of the present invention;
FIG. 3 is a cross-sectional view schematically showing an example in which a retarder is formed of a single layer among exemplary embodiments of the present invention;
FIG. 4 is a cross-sectional view schematically showing an example in which a retarder is formed of a laminate of a cured liquid crystal layer and a substrate among exemplary embodiments of the present invention;
FIG. 5 is a cross-sectional view schematically showing a retarder-integrated touch-sensing electrode according to another exemplary embodiment of the present invention; and
FIG. 6 is a plan view schematically showing the retarder-integrated touch-sensing electrode according to the other exemplary embodiment of the present invention.
FIG. 7 is a cross-sectional view schematically showing an example in which a retarder is formed of a single layer among the other exemplary embodiments of the present invention; and
FIGS. 8 and 9 are cross-sectional views schematically showing examples in which a retarder is formed of a laminate of a cured liquid crystal layer and a substrate among the other exemplary embodiments of the present invention.

### DETAILED DESCRIPTION OF EXEMPLARY EMBODIMENTS

The present invention relates to a retarder-integrated touch-sensing electrode including at least one sensing pattern disposed on at least one surface of a retarder. Thus, the retarder-integrated touch-sensing electrode implements a thin film structure and has excellent visibility.

Hereinafter, exemplary embodiments of the present invention will be described in detail.

Generally, a touch-sensing electrode includes two types of sensing patterns, that is, an electrode pattern sensing an x-coordinate and an electrode pattern sensing a y-coordinate. In a retarder-integrated touch-sensing electrode according to an exemplary embodiment of the present invention, at least one of the first sensing pattern and the second sensing pattern is formed on at least one surface of a retarder. Accordingly, since the retarder-integrated touch-sensing electrode according to the exemplary embodiment of the present invention does not use an additional substrate for forming the touch-sensing electrode, a thin film structure may be achieved.

The retarder according to the exemplary embodiment of the present invention may be a single-layer or a laminate in which a cured liquid crystal layer is - adhered to a surface of a substrate. Accordingly, the retarder to be described hereinafter according to exemplary embodiments of the present invention may be understood as a single-layer or a laminate in which a cured liquid crystal layer is adhered on a surface of a substrate. As the single-layer retarder, a single-layer retarder known in the field may be used without any specific limitation. For example, the single-layer retarder may be a stretched polymer film or a coating film obtained by directly coating a predetermined substrate with a polymer solution containing reactive liquid crystal monomers.

The laminate retarder may usually be obtained by coating a substrate with a polymer solution containing a liquid crystalline compound, and curing the polymer solution. Here, the substrate may be a normal transparent protection film or an alignment film inducing orientation of a liquid crystalline compound.

As the protection film available in exemplary embodiments of the present invention, a film having excellent transparency, mechanical strength, thermal stability, moisture shielding, and isotropy may be used. As specific examples, films composed of thermoplastic resins, for example, polyester-based resins such as polyethylene terephthalate, polyethylene isophthalate, polyethylene naphthalate, and polybutylene terephthalate, cellulose-based resins such as diacetyl cellulose and triacetyl cellulose, polycarbonate-based resins, acrylic-based resins such as poly methyl (meta) acrylate and polyethyl (meta) acrylate, styrene-based resins such as polystyrene and acrylonitrile-styrene copolymers, polyolefin-based resins such as polyethylene, polypropylene, cyclo-based or norbornene-structured polyolefin, and ethylene-propylene copolymers, vinyl chloride-based resins, amide-based resins such as nylon and aromatic polyamides, imide-based resins, polyether-sulfone-based resins, sulfone-based resins, polyether-ether-ketone-based resins, polyphenylenesulfide-based resins, vinyl-alcohol-based resins, vinylidene chloride-based resins, vinyl-butyral-based resins, allylate-based resins, polyoxymethylene-based resins, and epoxy-based resins, may be used, and a film composed of a blend of the thermoplastic resins may be used. In addition, a film composed of (meta) acrylic-based, urethane-based, acrylic-urethane-based, epoxy-based, and silicon-based thermoplastic resins or UV-cured resins may be used.

The content of the thermoplastic resins in the protection film may be in a range of 50 to 100 wt%, preferably 50 to 99 wt%, more preferably 60 to 98 wt%, and the most preferably 70 to 97 wt%. When the content is less than 50 wt%, the original high transparency of the thermoplastic resins may not be sufficiently expressed.

Such a protection film may include one or more appropriate additives. As the additives, for example, ultraviolet absorbers, antioxidants, lubricants, plasticizers, release agents, anti-coloring agents, flame retardants, nucleating agents, antistatic agents, pigments, colorants, and the like may be used.

In addition, the protection film may be surface-treated if necessary. The surface treatment may include a dry treatment, such as a plasma treatment, a corona treatment, and a primer treatment, and a chemical treatment such as an alkali treatment including a saponification treatment.

As the alignment layer, an organic alignment layer used in the field may be preferably used, but is not limited thereto.

The organic alignment layer may be formed by using an alignment layer composition containing an acrylate group, a polyimide group, or a polyamic acid group. The polyamic acid is a polymer obtained by reacting a di-amine and a dianhydride, and the polyimide is a polymer obtained by imidizing the polyamic acid. However, the structure thereof may not be particularly limited.

Next, the alignment layer may obtain an orientation. A method of obtaining the orientation may not be particularly limited. For example, a rubbing process or a photo-curing process using exposure may be used.

The cured liquid crystal layer formed on the substrate may be formed by coating the substrate with a composition for a cured liquid crystal layer. The composition for a cured liquid crystal layer may include a liquid crystalline compound having optical anisotropy and photo-crosslinkable properties. For example, a reactive liquid crystal monomer (RM) may be preferably used.

According to the exemplary embodiment of the present invention, when a retarder is a laminate in which a cured liquid crystal layer is adhered to one surface of the substrate, at least one sensing pattern formed on the retarder may be formed on only the one surface of the substrate or on only one surface of the cured liquid crystal layer, or a first sensing pattern may be formed on one surface of the substrate, and a second sensing pattern may be formed on one surface of the cured liquid crystal layer. On the other hand, when the retarder is a single-layer, at least one sensing pattern may be formed on only one surface of the single-layer, or a first sensing pattern may be formed on one surface of the single-layer retarder and a second sensing pattern may be formed on the other surface of the single-layer retarder.

In addition, as needed, in a retarder-integrated touch-sensing electrode according to the exemplary embodiment of the present invention, the difference in refractive index between a retarder and a sensing pattern disposed on a surface of the retarder may be 0.8 or less. Since the sensing pattern has a high reflectance, when the difference in reflectance between the sensing pattern and the surroundings is large enough for the sensing pattern to be visually identified, the visibility of the retarder-integrated touch-sensing electrode may be degraded. According to the exemplary embodiment of the present invention, since the difference in refractive index between the retarder and the sensing pattern formed on the retarder is 0.8 or less, the difference in reflectance between the sensing pattern and the retarder may be minimized and visibility may be improved. Specific values of the refractive indexes of the retarder and the sensing pattern may be adjusted by well-known methods in the art, that is, by controlling a thickness of each layer and using a specific kind of each material. In this aspect, the refractive index of the sensing pattern may be preferably in a range of 1.3 to 2.5. The refractive index of the sensing pattern may vary depending on a specific condition of a manufacturing process even when the same material is used. Accordingly, the refractive index of the sensing pattern may be adjusted to satisfy the range of the refractive index according to the exemplary embodiment of the present invention. When the refractive index of the sensing pattern is within the above range, the difference in refractive index between the sensing pattern and the retarder may be easily within the scope of the present invention, and the effect of improving the visibility may be excellent.

Exemplary embodiments of the present invention will be described in detail below with reference to the accompanying drawings. The drawings are provided to illustrate merely typical or exemplary embodiments of the invention and facilitate the understanding of the invention, and it should be understood that the scope of the present invention is not limited by the accompanying drawings.

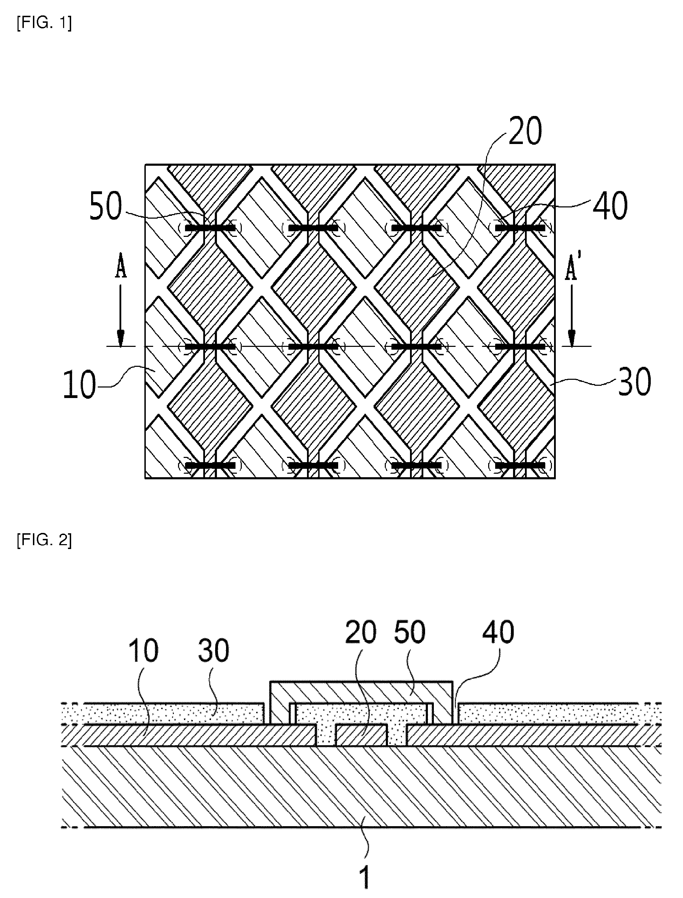

FIG. 1 is a plan view schematically showing a retarder-integrated touch-sensing electrode according to an exemplary embodiment of the present invention. The retarder-integrated touch-sensing electrode according to the exemplary embodiment of the present invention, as illustrated in FIG. 1, may include a retarder (not shown), first sensing patterns 10, second sensing patterns 20, an insulating layer 30, and bridge electrodes 50, and the first sensing patterns 10 and the second sensing patterns 20 may be formed on one surface of the retarder 1.

The first sensing patterns 10 and the second sensing patterns 20 may be arranged in different directions and provide information on X and Y coordinates of a touch point. More specifically, when a human hand or an object touches a transparent substrate, a change in capacitance according to a touch point may be transferred to a driving circuit via the first sensing patterns 10, the second sensing patterns 20, and a position detection line. In addition, the change of the capacitance may be converted to an electrical signal by an X and Y input processing circuit (not shown) or the like, and thus the touch point may be determined.

In this regard, the first sensing patterns 10 and the second sensing patterns 20 may be formed on the same surface of the retarder 1, and may need to be electrically connected to each other in order to detect a touch point. Here, since the second sensing patterns 20 are connected to each other, but the first sensing patterns 10 are isolated in the form of islands, additional connection electrodes (the bridge electrodes) 50 may be required to electrically connect the first sensing patterns 10.

However, the bridge electrodes 50 may be formed on a different layer from the second sensing patterns 20 in order not to be electrically connected to the second sensing patterns 20. FIG. 2 shows an enlarged view of a portion, in which the bridge electrode 50 is formed, of a cross-section region taken along line A-A' of FIG. 1.

Referring to FIG. 2, the first sensing patterns 10 and the second sensing pattern 20 formed on the retarder 1 are electrically isolated from each other by the insulating layer 30 formed on the first sensing patterns 10 and the second sensing pattern 20. In addition, as described above, since the first sensing patterns 10 need to be electrically connected to each other, the first sensing patterns 10 may be electrically connected by the bridge electrode 50.

In order to connect the first sensing patterns 10 separated in the form of islands using the bridge electrode 50 while electrically isolating the first sensing patterns 10 from the second sensing pattern 20, contact holes 40 may be formed on the insulating layer 30, and then the additional bridge electrode 50 may be formed.

As the first sensing patterns 10 and the second sensing patterns 20 of the touch-sensing electrode, materials used in the field may be used without any limitation. In order not to inhibit the visibility of an image displayed on a screen, the first sensing patterns 10 and the second sensing patterns 20 may be preferably formed of a transparent material or formed with fine patterns. As specific examples, indium tin oxide (ITO), indium zinc oxide (IZO), zinc oxide (ZnO), indium zinc tin oxide (IZTO), cadmium tin oxide (CTO), poly(3,4-ethylenedioxythiophene) (PEDOT), a carbon nanotube (CNT), a metal wire, or the like may be used. These materials may be used alone or by mixing two or more kinds thereof.

A metal used in the metal wire may not be particularly limited, and may be, for example, silver (Ag), gold (Au), aluminum (Al), copper (Cu), iron (Fe), nickel (Ni), titanium (Ti), tellurium (Te), chromium (Cr), or the like. These metals may be used alone or by mixing two or more kinds thereof.

In order to form the sensing patterns 10 and 20 and the insulating layer 30 on the retarder 1, a material having an excellent heat resistance may be used as the retarder 1, or the sensing patterns 10 and 20 and the insulating layer 30 may be formed in a low temperature process, such as a printing method, a coating method, or a low temperature (room temperature) sputtering method.

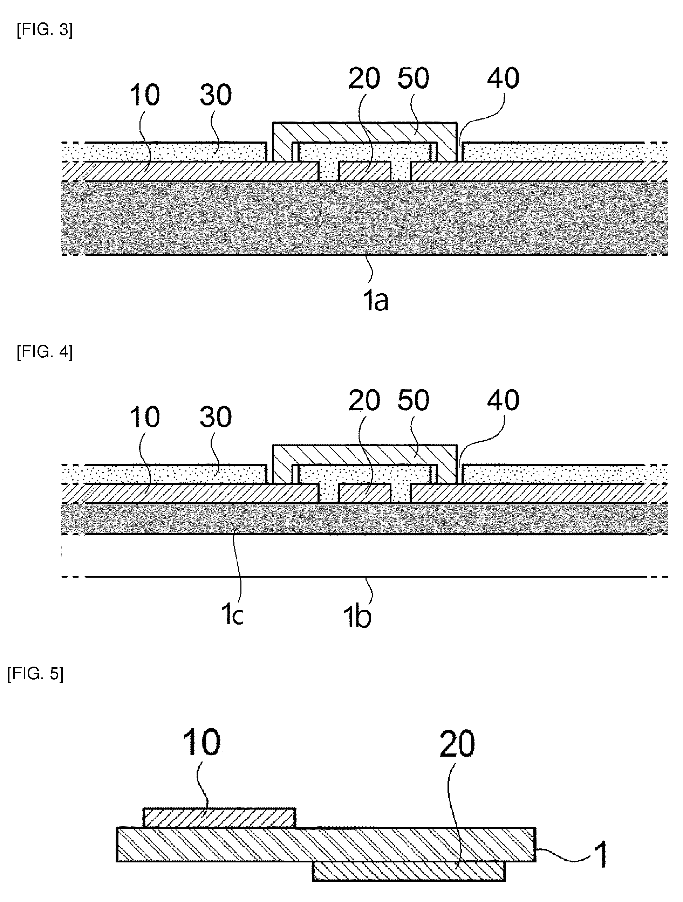

FIG. 3 schematically shows an example in which a single-layer retarder 1a is used as the retarder 1 according to an embodiment of the inventive concept. The single-layer retarder 1a may be a stretched polymer film or a layer coated on another optical member of a touch screen panel.

FIG. 4 schematically shows an example in which a laminate formed of a cured liquid crystal layer 1c and a substrate 1b is used as the retarder 1 according to another embodiment of the inventive concept. Although a touch-sensing electrode is illustrated as being formed on the cured liquid crystal layer 1c in FIG. 4, alternatively, the touch-sensing electrode may be formed on the substrate 1b. In addition, the substrate 1b may be attached on one surface or both surfaces of the cured liquid crystal layer 1c. When the substrate 1b is attached on both surfaces of the cured liquid crystal layer 1c, one surface may be an alignment layer, and the other surface may be a protection film.

As still another exemplary embodiment of the present invention, FIG. 5 schematically shows an example in which a first sensing pattern 10 and a second sensing pattern 20 of a touch-sensing electrode are respectively formed on different surfaces of a retarder 1.

Referring to FIG. 5, a retarder-integrated touch-sensing electrode according to the exemplary embodiment of the present invention may have a structure in which the first sensing pattern 10 and the second sensing pattern 20 are respectively formed on different surfaces of the retarder 1. In this way, when the first sensing pattern 10 and the second sensing pattern 20 are respectively formed on different surfaces of the retarder 1, an additional insulating layer may not need to be formed on the retarder 1 since the first sensing pattern 10 and the second sensing pattern 20 are electrically isolated from each other by the retarder 1, and accordingly, a thin film structure may be implemented.

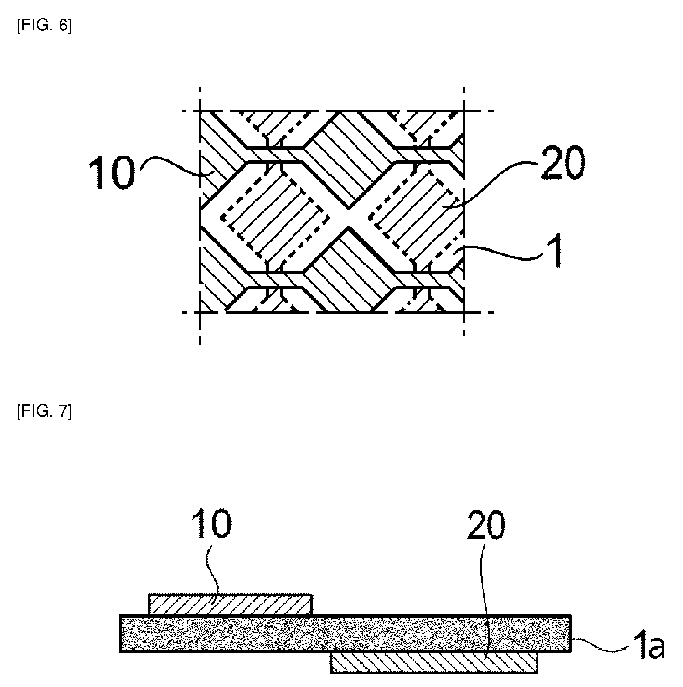

Further, FIG. 6 is a schematic plan view showing the retarder-integrated touch-sensing electrode of FIG. 5. When the first sensing pattern 10 and the second sensing pattern 20 are formed on the same plane, a bridge electrode 50 may be required, as illustrated in FIG. 2. However, referring to FIG. 6, since the sensing patterns are formed on different planes according to the embodiment of the present invention, each sensing pattern may have an electrically connected structure with no bridge electrode 50. Accordingly, a thin film structure may be implemented and a process of fabricating a touch-sensing electrode may be remarkably reduced.

FIG. 7 schematically shows an example in which a retarder 1 according to an exemplary embodiment of the present invention is a single-layer. The single-layer retarder 1a may be a stretched polymer film, or a layer coated on another optical member of a touch screen panel.

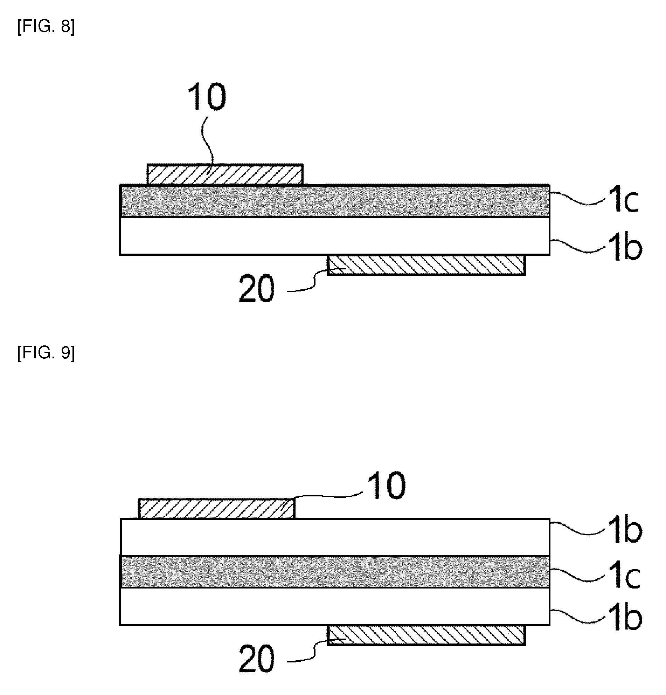

FIGS. 8 and 9 schematically show other examples in which a retarder 1 is a laminate of a cured liquid crystal layer 1c and a substrate 1b, according to the exemplary embodiment of the present invention. In FIG. 8, the retarder 1 is formed of the cured liquid crystal layer 1c and one substrate 1b attached on one surface of the cured liquid crystal layer 1c. In FIG. 9, the substrates 1b are formed on both surfaces of the cured liquid crystal layer 1c. In FIG. 9, one of the substrates 1b may be an alignment layer, and the other substrate 1b may be a protection film.

The above-described retarder-integrated touch-sensing electrode according to the exemplary embodiment of the present invention may further include a structure having an adhesive layer and a release film sequentially stacked on at least one surface thereof in order to facilitate transportation and attachment to other components later.

The retarder-integrated touch-sensing electrode according to the exemplary embodiment of the present invention may be formed to be a touch screen panel through an additional process well-known in the field.

For example, an optical functional film may be attached on upper and lower surfaces of the retarder-integrated touch-sensing electrode according to the exemplary embodiment of the present invention, using an adhesive layer. In this exemplary embodiment of the present invention, the adhesive layer may be an adhesive layer or pressure sensitive adhesive layer. In addition, according to the exemplary embodiment of the present invention, the upper surface of the retarder may be referred to as a viewing side with respect to the retarder, and the lower surface of the retarder may be referred to as an opposite side to the viewing side with respect to the retarder.

In this case, when at least one sensing pattern is formed on the upper surface of the retarder, the difference in refractive index between the adhesive layer and the sensing pattern disposed on the upper surface may be preferably 0.3 or less in terms of improving the visibility of the sensing pattern. Since light is incident on the adhesive layer and the sensing pattern before it passes through the retarder, the difference in refractive index between the adhesive and the sensing pattern may need to be 0.3 or less in order to reduce the reflectance of the sensing pattern.

When the retarder includes the sensing pattern on each of the upper surface and the lower surface thereof (that is, a first sensing pattern on the upper surface and a second sensing pattern on the lower surface), the difference in refractive index between the sensing pattern of the upper surface and the adhesive layer thereon may be preferably 0.3 or less, and the difference in refractive index between the sensing pattern of the lower surface and the adhesive layer thereon may be preferably 0.8 or less. When the difference in refractive index between the sensing pattern of the lower surface and the adhesive layer thereon exceeds 0.8, the visibility of the sensing pattern of the lower surface may be degraded.

As another exemplary embodiment of the present invention, when the retarder includes both first sensing pattern and second sensing pattern on a lower surface thereof and an optical functional film attached on an upper surface thereof using an adhesive layer, the difference in refractive index between the adhesive layer and the sensing patterns of the lower surface may be preferably 0.8 or less. As described above, when the difference in refractive index between the adhesive layer of the upper surface and the sensing patterns of the lower surface is greater than 1.2, the visibility of the sensing pattern of the lower surface may be degraded.

The optical functional film which can be attached to the retarder-integrated touch-sensing electrode according to the exemplary embodiment of the present invention may be, for example, but not limited thereto, a polarizing plate, an antireflection film, an antifouling film, and a hard coating film.

Such a touch screen panel according to the exemplary embodiment of the present invention may be combined to a display apparatus, such as a liquid crystal display (LCD), an organic electro-luminescence display (OLED), and a flexible display.

Hereinafter, various exemplary embodiments of the present invention are disclosed, but the present invention should not be construed as limited to exemplary embodiments of the present invention set forth herein. While the present invention is shown and described in connection with exemplary embodiments thereof, it will be apparent to those skilled in the art that various modifications can be made without departing from the spirit and scope of the invention.

### Example 1-6 and Comparative Example 1-4

Retarder-integrated touch-sensing electrodes having refractive indexes listed in Table 1 below were fabricated, and an average reflectance of each was measured. The average reflectance refers to an average of reflectance values measured in a range of 400 nm to 700 nm.

**[Table 1]**

| | Retarder | | First Sensing Pattern | | Insulating Layer | | Second Sensing Pattern | | Δ Reflectance (%) |
|---|---|---|---|---|---|---|---|---|---|
| | Type | Refractive Index | Location | Refractive Index | Location | Refractive Index | Location | Refractive Index | |
| Example 1 | a-1 | 1.51 | First Surface of Retarder | 1.7 | First Surface of Retarder | 1.53 | First Surface of Retarder | 1.8 | 0.3 % |
| Example 2 | a-1 | 1.51 | First Surface of Retarder | 2.0 | First Surface of Retarder | 1.53 | First Surface of Retarder | 2.0 | 1.7 % |
| Example 3 | a-2 | 1.55 | First Surface of Retarder | 2.3 | First Surface of Retarder | 1.53 | First Surface of Retarder | 2.3 | 4.0 % |
| Example 4 | a-1 | 1.51 | First Surface of Retarder | 1.7 | - | - | Second Surface of Retarder | 1.7 | 0.35 % |
| Example 5 | a-2 | 1.55 | First Surface of Retarder | 2.0 | - | - | Second Surface of Retarder | 2.0 | 1.6 % |
| Example6 | a-2 | 1.55 | First Surface of Retarder | 2.3 | - | - | Second Surface of Retarder | 2.3 | 3.8 % |
| Comparative Example 1 | a-1 | 1.51 | First Surface of Retarder | 2.5 | First Surface of Retarder | 1.53 | First Surface of Retarder | 2.5 | 5.8 % |
| Comparative Example2 | a-2 | 1.55 | First Surface of Retarder | 2.5 | First Surface of Retarder | 1.53 | First Surface of Retarder | 2.5 | 5.8 % |
| Comparative Example3 | a-1 | 1.51 | First Surface of Retarder | 2.5 | - | - | Second Surface of Retarder | 2.5 | 6.3% |
| Comparative Example4 | a-2 | 1.55 | First Surface of Retarder | 2.5 | - | - | Second Surface of Retarder | 2.5 | 5.5% |
| Retarder | | | | | | | | | |
| a-1: (Film type, WRS) | | | | | | | | | |
| a-2: (Coating film type, Liquid crystal alignment type) | | | | | | | | | |
| First sensing pattern: ITO (Extinction coefficient: 0) | | | | | | | | | |
| Second sensing pattern: ITO (Extinction coefficient: 0) | | | | | | | | | |
| Insulating layer: NCS-801(Sumitomo Chemical Co., Ltd.), (Refractive index: 1.51, Extinction coefficient: 0) | | | | | | | | | |
| Refractive index and Extinction coefficient are based on light having a wavelength of 550 nm. | | | | | | | | | |

Referring to Table 1, examples in which the differences in refractive index between the retarder and the sensing pattern are 0.8 or less have a smaller reflectance than comparative examples and thus have excellent visibility.

### Example 7-10 and Comparative Example 5-7

A polarizing plate was attached to upper surfaces of retarder-integrated touch-sensing electrodes having refractive indexes listed in Table 2 below using adhesives, and an average reflectance of each was measured based on a top view in the same manner as in Example 1.

**[Table 2]**

| | Retarder | | First Sensing Pattern | | Insulating Layer | | Second Sensing Pattern | | Adhesive | Δ Reflectance (%) (First Electrode/ Adhesive) | ΔReflectance (%) (Second Electrode/ Adhesive) |
|---|---|---|---|---|---|---|---|---|---|---|---|
| | Type | Refractive Index | Location | Refractive Index | Location | Refractive Index | Location | Refractive Index | Refractive Index | | |
| Example 7 | a-1 | 1.51 | Upper Surface of Retarder | 1.54 | Upper Surface of Retarder | 1.53 | Upper Surface of Retarder | 1.54 | 1.56 | 0.004 % | 0.004 % |
| Example 8 | a-2 | 1.55 | Upper Surface of Retarder | 1.7 | Upper Surface of Retarder | 1.53 | Upper Surface of Retarder | 1.7 | 1.67 | 0.008 % | 0.008 % |
| Example 9 | a-1 | 1.51 | Lower Surface of Retarder | 1.6 | Lower Surface of Retarder | 1.53 | Lower Surface of Retarder | 1.6 | 1.58 | 0.004 % | 0.004 % |
| Example 10 | a-1 | 1.51 | Upper Surface of Retarder | 1.54 | - | - | Lower Surface of Retarder | 1.7 | 1.52 | 0.004 % | 0.3 % |
| Example 11 | a-2 | 1.55 | Upper Surface of Retarder | 1.54 | - | - | Lower Surface of Retarder | 2.0 | 1.52 | 0.004 % | 1.8 % |
| Example 12 | a-2 | 1.55 | Upper Surface of Retarder | 1.54 | - | - | Lower Surface of Retarder | 2.3 | 1.52 | 0.004 % | 4.2% |
| Comparative Example 5 | a-1 | 1.51 | Upper Surface of Retarder | 2.5 | Upper Surface of Retarder | 1.53 | Upper Surface of Retarder | 2.5 | 1.52 | 6.0% | 6.0% |
| Comparative Example 6 | a-2 | 1.55 | Lower Surface of Retarder | 2.5 | Lower Surface of Retarder | 1.53 | Upper Surface of Retarder | 2.5 | 1.62 | 6.0% | 4.5% |
| Comparative Example 7 | a-1 | 1.51 | Upper Surface of Retarder | 2.5 | - | - | Lower Surface of Retarder | 2.5 | 1.67 | 6.0% | 4.0% |
| Retarder | | | | | | | | | | | |
| a-1: (Film type, WRS) | | | | | | | | | | | |
| a-2: (Coating film type, Liquid crystal alignment type) | | | | | | | | | | | |
| First sensing pattern: ITO | | | | | | | | | | | |
| Second sensing pattern: ITO | | | | | | | | | | | |
| Insulating layer: NCS-801(Sumitomo Chemical Co., Ltd.), (Refractive index: 1.51) | | | | | | | | | | | |
| Refractive index and Extinction coefficient are based on light having a wavelength of 550 nm. | | | | | | | | | | | |

Referring to Table 2, examples in which the differences in refractive index between upper sensing patterns and upper adhesive layers are 0.3 or less have a small reflectance and thus has excellent visibility.

In addition, examples in which the differences in refractive index between lower sensing patterns and upper adhesive layers are 0.8 or less also have a small reflectance and thus have excellent visibility.

## Claims

1. A retarder-integrated touch-sensing electrode, comprising at least one sensing pattern formed on at least one surface of a retarder.

2. The retarder-integrated touch-sensing electrode of claim 1, wherein the retarder is a single layer or a laminate in which a cured liquid crystal layer is adhered to a surface of a substrate.

3. The retarder-integrated touch-sensing electrode of claim 2, wherein the single-layer retarder is a coating layer.

4. The retarder-integrated touch-sensing electrode of claim 2, wherein when the retarder is the laminate of the substrate and the cured liquid crystal layer, both a first sensing pattern and a second sensing pattern are formed on only one surface of the substrate or the cured liquid crystal layer.

5. The retarder-integrated touch-sensing electrode of claim 2, wherein when the retarder is the laminate of the substrate and the cured liquid crystal layer, a first sensing pattern is formed on one surface of the substrate, and a second sensing pattern is formed on one surface of the cured liquid crystal layer.

6. The retarder-integrated touch-sensing electrode of claim 2, wherein when the retarder is a single layer, both a first sensing pattern and a second sensing pattern are formed on only one surface of the single-layer retarder.

7. The retarder-integrated touch-sensing electrode of claim 2, wherein when the retarder is the single-layer, a first sensing pattern is formed on one surface of the single-layer retarder, and a second sensing pattern is formed on the other surface of the single-layer retarder.

8. The retarder-integrated touch-sensing electrode of claim 1, wherein first sensing patterns and second sensing patterns are disposed on one surface of the retarder, an insulating layer is disposed on the first and second sensing patterns, and a bridge electrode electrically connecting the first sensing patterns spaced apart from each other is disposed on the insulating layer.

9. The retarder-integrated touch-sensing electrode of claim 1, wherein the retarder includes a first sensing pattern disposed on one surface thereof and a second sensing pattern disposed on the other surface thereof, and the retarder electrically insulates the first sensing pattern from the second sensing pattern.

10. The retarder-integrated touch-sensing electrode of claim 1, wherein the difference in refractive index between the retarder and the sensing pattern disposed on the one surface of the retarder is about 0.8 or less.

11. The retarder-integrated touch-sensing electrode of claim 1, wherein the refractive index of the sensing pattern is in a range of about 1.3 to 2.5.

12. A touch screen panel, comprising the retarder-integrated touch-sensing electrode of any one of claims 1 to 11.

13. The touch screen panel of claim 12, wherein the retarder-integrated touch-sensing electrode includes at least one sensing pattern disposed on an upper surface of a retarder, and an optical functional film adhered to the sensing pattern by an adhesive layer, and
the difference in refractive index between the adhesive layer and the sensing pattern disposed on the upper surface is about 0.3 or less.

14. The touch screen panel of claim 13, wherein the difference in refractive index between the adhesive layer and a sensing pattern disposed on a lower surface of the retarder is about 0.8 or less.

15. The touch screen panel of claim 12, wherein the retarder-integrated touch-sensing electrode includes a first sensing pattern and a second sensing pattern on a lower surface of the retarder, and an optical functional film adhered to an upper surface of the retarder using an adhesive layer, and
the difference in refractive index between the adhesive layer and the sensing patterns disposed on the lower surface is about 0.8 or less.

16. The touch screen panel of claim 12, wherein the touch screen panel is adhered to a flexible display.
